Europäisches Patentamt

European Patent Office

Office européen des brevets

(11) Publication number : **0 524 825 A1**

(12)

# EUROPEAN PATENT APPLICATION

(21) Application number : 92306753.2

(22) Date of filing : 23.07.92

(51) Int. Cl.[5] : **C02F 1/04, B01D 3/00**

(30) Priority : **25.07.91 JP 186435/91**

(43) Date of publication of application :
**27.01.93 Bulletin 93/04**

(84) Designated Contracting States :
**DE GB**

(71) Applicant : **KONICA CORPORATION**
**26-2, Nishi-shinjuku 1-chome Shinjuku-ku**
**Tokyo (JP)**

(71) Applicant : **SANYO ELECTRIC CO., LTD.**
**18, 2 chome, Keihan-Hondori**
**Moriguchi-shi Osaka 570 (JP)**

(71) Applicant : **The Tokyo Electric Power Co., Inc.**
**1-3, Uchisaiwai-cho, 1-chome**
**Chiyoda-ku Tokyo (JP)**

(72) Inventor : **Shimizu, Akira, c/o Konica**
**Corporation**
**1, Sakura-machi**
**Hino-shi, Tokyo (JP)**

Inventor : **Kurematsu, Masayuki, c/o Konica**
**Corporation**
**1, Sakura-machi**
**Hino-shi, Tokyo (JP)**
Inventor : **Yuzawa, Satoshi, c/o Konica**
**Corporation**
**1, Sakura-machi**
**Hino-shi, Tokyo (JP)**
Inventor : **Ushiroyama, Hiroyuki, c/o Konica**
**Corporation**
**1, Sakura-machi**
**Hino-shi, Tokyo (JP)**
Inventor : **Kawada, Toshiaki, c/o Sanyo Electric**
**Co.Ltd.,**
**18, 2-chome, Keihan-Hondori**
**Moriguchi-shi, Osaka (JP)**
Inventor : **Yoshiokaya, Yukio, c/o Sanyo**
**Electric Co.Ltd.,**
**18, 2-chome, Keihan-Hondori**
**Moriguchi-shi, Osaka (JP)**

(74) Representative : **Ellis-Jones, Patrick George**
**Armine et al**
**J.A. KEMP & CO. 14 South Square Gray's Inn**
**London WC1R 5LX (GB)**

(54) **Method of treating waste liquor.**

(57)    A method of treating a waste liquor comprises three stages. In the first stage, an acidic (or alkaline) waste liquor is treated in a first separating-by-evaporation process which comprises the steps of evaporating the acidic (or alkaline) waste liquor, and condensing the resulting vapor into an acidic (or alkaline) distillate, to thereby separate the acidic (or alkaline) waste liquor into solids and the acidic (or alkaline) distillate. In the second stage, the pH of the acidic (or alkaline) distillate is adjusted to an alkaline (or acidic) value. In the third stage, the resulting pH-adjusted distillate is treated in a second separating-by-evaporation process which comprises the steps of evaporating the pH-adjusted distillate, and condensing the resulting vapor into a distillate, to thereby separate the pH-adjusted distillate into solids and the distillate.

EP 0 524 825 A1

## BACKGROUND OF THE INVENTION

This invention relates to a method of treating a waste liquor produced as an industrial waste, and more particularly to a method of treating waste liquor produced from treating liquids used in a process of treating light-sensitive silver halide photographic materials.

There have been proposed various methods of treating a waste liquor, such as the activated sludge method (e.g. in Japanese Patent Publications (Kokoku) Nos. 12943/1976 and 7952/1976), the evaporation method (e.g. in Japanese Unexamined Patent Publications (Kokai) Nos. 89437/1974 and 33996/1981), the electrolytic oxidation method (e.g. in Japanese Unexamined Patent Publications (Kokai) Nos. 84462/1973 and 119458/1974, Japanese Patent Publication (Kokoku) No. 43478/1978, and Japanese Unexamined Patent Publication (Kokai) No. 119457/1974), the ion exchange method (e.g. in Japanese Patent Publication (Kokoku) No. 37704/1976, Japanese Unexamined Patent Publication (Kokai) No. 383/1978, and Japanese Patent Publication (Kokoku) No. 43271/1978), the reverse osmosis method (e.g. in Japanese Unexamined Patent Publication (Kokai) No. 22463/1975), and the chemical treatment method (e.g. in Japanese Unexamined Patent Publication (Kokai) No. 64257/1974, Japanese Patent Publication (Kokoku) No. 37396/1982, Japanese Unexamined Patent Publications (Kokai) Nos. 12152/1978, 58833/1974, and 63763/1978, and Japanese Patent Publication (Kokoku) No. 37395/1982).

Some of the proposed methods are in practical use, but not free from inconveniences. For instance, the activated sludge method necessitates provision of a large-scale installation, which makes it difficult to obtain a site for the installation, and very complicated operation control, which makes it necessary for an operator to have expertise in operating the installation properly and efficiently. The electrolytic oxidation method suffers from a problem of evolution of toxic or flammable gases depending on the composition of a waste liquor to be treated. The ion exchange method or the reverse osmosis method is very low in treating efficiency if concentration of an injurious material in a waste liquor is high. The chemical treatment method requires large amounts of additives, and requires to be used in combination with some other method to effect sufficient treatment of a waste liquor.

The evaporation method comprises evaporating a waste liquor, and condensing the resulting vapor into a distillate, to thereby separate the waste liquor into solids and water. Studies have also been made on a device therefor, and there have been proposed one in which a heat pump circuit is utilized in means for evaporation and condensation. However, waste liquors produced from a process of treating photosensitive materials contain a lot of injurious component materials, and therefore, a distillate produced as the result of treatment thereof by the evaporation method is not harmless or non-toxic enough to permit direct disposal thereof into sewerage.

## SUMMARY OF THE INVENTION

It is the object of the invention to provide a method of treating a waste liquor, which is an improvement to the above-mentioned evaporation method which can be effectively utilized in treating waste liquors produced from a process of treating a photographic material.

To attain the object, according to a first aspect of the invention, there is provided a method of treating a waste liquor comprising the stages of:
treating an acidic waste liquor in a first separating-by-evaporation process,
the separating-by-evaporation process comprising the steps of evaporating the acidic waste liquor, and condensing the resulting vapor into an acidic distillate, to thereby separate the acidic waste liquor into solids and the acidic distillate;
adjusting pH of the acidic distillate to an alkaline value; and
treating the resulting pH-adjusted distillate in a second separating-by-evaporation process,
the second separating-by-evaporating process comprising the steps of evaporating the pH-adjusted distillate, and
condensing the resulting vapor into a distillate, to thereby separate the pH-adjusted distillate into solids and the distillate.

Preferably, the pH of the acidic distillate is adjusted by the use of an alkaline waste liquor.

According to a second aspect of the invention, there is provided a method of treating a waste liquor comprising the stages of:
treating an alkaline waste liquor in a first separating-by-evaporation process,
the separating-by-evaporation process comprising the steps of evaporating the alkaline waste liquor, and condensing the resulting vapor into an alkaline distillate, to thereby separate the alkaline waste liquor into solids and the alkaline distillate;
adjusting pH of the alkaline distillate to an acidic value; and

treating the resulting pH-adjusted distillate in a second separating-by-evaporation process,
the second separating-by-evaporation process comprising the steps of evaporating the pH-adjusted distillate, and
condensing the resulting vapor into a distillate, to thereby separate the pH-adjusted distillate into solids and the distillate.

Preferably, the pH of the alkaline distillate is adjusted by the use of an acidic waste liquor.

In each of the above methods of the present invention, if any of the waste liquor contains ammonia, it is preferred that a metal selected from group II in the periodic table is added to the distillate obtained from the first separating-by-evaporation process.

The pH of a waste liquor depends on the kinds and contents of components contained in the waste liquor. The degree of ionization of molecules of each component depends on the pH of the waste liquor. More specifically, an acidic substance which exhibits acidic properties in water is mostly present in the form of molecules in an acidic solution which is small in pH-value (i.e. high in hydrogen ion concentration) since the equilibrium of ionization in the solution shifts in a direction suppressing ionization of the acidic substance (i.e. in a direction suppressing production of hydrogen ions). Conversely, when the acidic substance is in an alkaline solution which is large in pH-value (i.e. low in hydrogen ion concentration), it is mostly present in the form of ions since the equilibrium of ionization in the solution shifts in a direction promoting ionization of the acidic substance (i.e. in a direction promoting production of hydrogen ions). However, this does not hold for strong acids which are almost completely ionized in water.

On the other hand, a basic substance which exhibits alkaline properties in water is mostly present in the form of ions in an acidic solution which is small in pH-value (i.e. high in hydrogen ion concentration) since the equilibrium of ionization in the solution shifts in a direction promoting ionization of the basic substance (i.e. in a direction promoting production of hydride ions). Conversely, when the basic substance is in an alkaline solution which is large in pH-value (i.e. low in hydrogen ion concentration), it is mostly present in the form of molecules since the equilibrium of ionization shifts in a direction suppressing ionization of the basic substance (i.e. in a direction suppressing production of hydride ions). However, this does not hold for strong bases which are almost completely ionized in water.

Generally speaking, a substance vaporizes when it is in the form of molecules but does not vaporize when it is in the form of ions. Therefore, if a waste liquor containing both a substance in the form of molecules and a substance in the form of ions is evaporated, and then the resulting vapor is condensed to a distillate, the distillate thus obtained does not contain the substance which was present in the form of ions in the waste liquor.

The present invention utilizes this nature of ions.

According to the method of the first aspect of the invention, treatment of the acidic waste liquor in the first separating-by-evaporation process gives the acidic distillate which contains only acidic substances which were present in the form of molecules in the waste liquor, and solids in which remain basic substances which were present in the form of ions. By adjusting the pH of this distillate to an alkaline value, the equilibrium of ionization of the acidic substances present in the distillate is shifted, so that the acidic substances are now mostly present in the form of ions in the distillate. Another treatment of the distillate, which has its pH-value adjusted to an alkaline value, in the second separating-by-evaporation process gives a distillate which does not contain the acidic substances, and solids in which remain the acidic substances.

According to the method of the second aspect of the invention, treatment of the alkaline waste liquor in the first separating-by-evaporation process gives the alkaline distillate which contains only basic substances which were present in the form of molecules in the waste liquor, and solids in which remain acidic substances which were present in the form of ions. By adjusting the pH of this distillate to an acidic value, the equilibrium of ionization of the basic substances present in the distillate is shifted, so that the alkaline substances are now mostly present in the form of ions in the distillate. Another treatment of the distillate, which has its pH-value adjusted to an acidic value, in the second separating-by-evaporation process gives a distillate which does not contain the basic substances, and solids in which remain the basic substances.

If a metal selected from the group II in the periodic table is added to a distillate which contains ammonia, the metal and ammonia form a complex, which precipitates. Therefore, according to the last-mentioned preferred form of the invention, it is possible to remove ammonia from the distillate.

The above and other objects, features, and advantages of the invention will become more apparent from the ensuing detailed description taken in conjunction with the accompanying drawings.

## BRIEF DESCRIPTION OF THE DRAWINGS

Fig. 1 is a schematic diagram showing an example of an apparatus used in a separating-by-evaporation process of the method according to the invention;

Fig. 2 is a schematic diagram showing one arrangement of devices used in carrying out the method according to the invention; and

Fig. 3 is a schematic diagram showing another arrangement of devices used in carrying out the method according to the invention.

DESCRIPTION OF THE PREFERRED EMBODIMENT

The invention will now be described in detail with reference to the drawings showing embodiments thereof. The embodiments are described only by way of examples, and hence the invention should not be considered to be limited thereto.

In the method according to the invention, a waste liquor can be evaporated by heating, reduced pressure, or a combination of heating and reduced pressure. However, in order to suppress evolution of injurious gases and emission of offensive smell, it is preferred not to perform heating alone, but to perform pressure reduction alone or heating and pressure reduction in combination. Further, in the present method, it is particularly preferred, from the viewpoint of energy efficiency, to make use of heat generated in the process of condensing vapor as means for evaporating the waste liquor (i.e. to carry out heat exchange by the use of a heat pump).

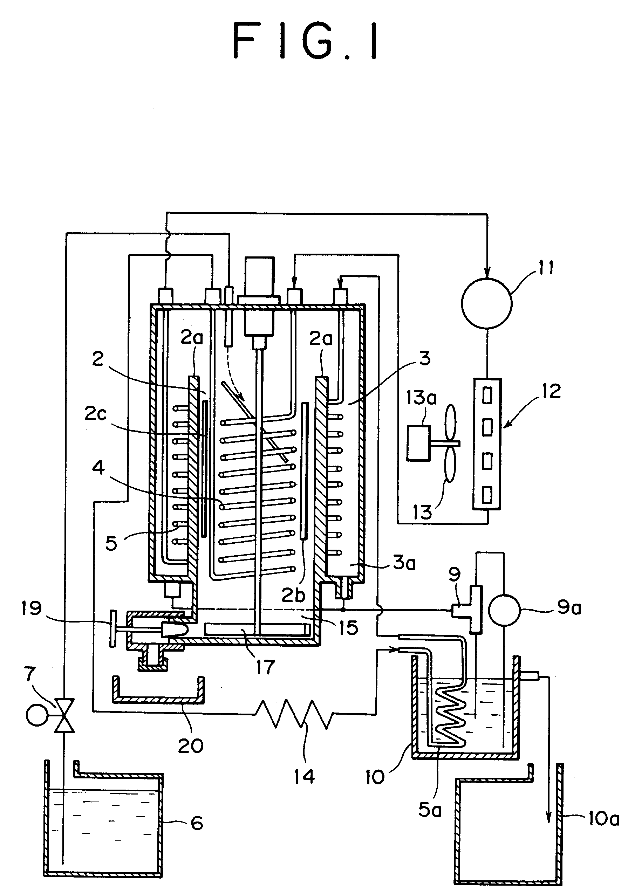

To this end, according to an embodiment of the invention, the separating-by-evaporation process thereof is carried out by the use of an evaporating/condensing apparatus shown in Fig. 1. This apparatus is adapted to lower boiling points of components of a waste liquor by reducing pressure therein, and thereby evaporate the waste liquor at a low temperature. It makes use of heat exchange by a heat pump. The evaporating/condensing apparatus comprises a main unit within which the waste liquor is evaporated and condensed, and external devices constituting a heat pump circuit for effecting the above-mentioned heat exchange to and from the interior of the main unit.

The interior of the main unit is divided by a hollow cylindrical partition wall 2a into an evaporating pot 2 defined inside the partition wall 2a, and a condensing vessel 3 defined between the partition wall 2a and the outer walls of the main unit. A level sensor 2b and a temperature sensor 2c are provided inside the evaporating pot 2. A heating pipe 4 and a cooling pipe 5 are provided each in a helical arrangement within the evaporating pot 2 and within the condensing vessel 3, respectively.

A waste liquor to be treated is supplied from a stock tank 6 into the evaporating pot 2. When the amount of the waste liquor in the evaporating pot 2 decreases to such an extent that the level of same is below a value to which the level sensor 2b is set, an electromagnetic valve 7 automatically opens for a predetermined time period and allows a predetermined amount of the waste liquor to be replenished into the evaporating pot 2. On this occasion, it is preferable to cause a replenished portion of the waste liquor to stand on the surface of the waste liquor remaining in the evaporating pot 2 to thereby prevent the separating efficiency of the method of the present invention from being lowered due to change in nature of the waste liquor.

Vapor evaporated in the evaporating pot 2 passes through the upper space within the main unit into the condensing vessel 3, where it is condensed to drops, which are collected as distillate at the bottom 3a of the condensing vessel 3. The collected distillate is drawn via an ejector 9 into water circulated by an ejector pump 9a, and then carried to a tank 10 for collecting distillate. The ejector pump 9a is simultaneously utilized in reducing pressure within the evaporating pot 2 arranged within the main unit. Distillate which overflows from the tank 10 is collected, e.g. in a stock tank 10a. On the other hand, solids of the waste liquor form a slurry at the bottom 15 of the evaporating pot 2. The slurry is swept out by a rotary vane device from a discharge port, which is opened and closed by a knob 19, and poured into a slurry-collecting container 20.

The heat pump circuit comprises a compressor 11, an air-cooled condenser 12, the aforementioned heating pipe 4, a capillary tube 14, a cooling pipe 5a in the tank 10, the aforementioned cooling pipe 5, and a compressor 11, arranged in the order mentioned for circulating a refrigerant therethrough.

More specifically, the refrigerant, which is compressed by the compressor 11 and thereby increased in temperature, is supplied to the heating pipe 4. However, if the temperature of the waste liquor within the evaporating pot 2 detected by the temperature sensor 2c is too high, a fan motor 13a is operated to drive a propeller fan 13 whereby the temperature of the refrigerant supplied to the heating pipe 4 is lowered.

The refrigerant passes through the heating pipe 4 while heating the waste liquor within the evaporating pot 2 and then reaches the capillary tube 14 which serves as an expansion valve. The refrigerant can pass through the capillary tube 14 only at a small rate so that when it leaves the capillary tube 14 into a conduit having a normal inner diameter, it undergoes adiabatic expansion to decrease in pressure and accordingly be lowered in temperature. The resulting refrigerant having a low temperature is supplied to the cooling pipe 5a in the tank 10 to cool the condensate. This cooling operation of the condensate contributes to reducing the smell of the condensate as well as enhancing the efficiency of reducing pressure within the evaporating/condensing apparatus 1. From the cooling pipe 5a, the refrigerant enters and passes through the cooling pipe 5 arranged within the condensing vessel 3 to cool vapor therein evaporated from the waste liquor within the evaporating pot 2, which is heated by the heating pipe 4, into distillate, and then returns to the compressor 11.

Normally, the surface temperature of the heating pipe 4 is maintained at 35 to 40°C while that of the cooling pipe 5 at 0 to 10°C, by regulation of pressure of refrigerant gas by the compressor 11, cooling of the refrigerant by the air-cooled condenser 12, change in pressure of the refrigerant gas caused by the capillary tube 14, etc.

Preferably, the evaporating/codensing apparatus is provided with a function of detecting a temperature at the outlet of the heating pipe 4 to thereby detect efficiency of heat absorption by the waste liquor, and thereby sense the water content of the waste liquor within the evaporating pot 2, and a function of automatically stopping its operation when the sensed water content of the waste liquor is lowered to a sufficient degree.

The evaporating/condensing apparatus which can be used in carrying out the method of the present invention is not restricted to the above-described form, but may be embodied in any form so long as it is provided with functions similar to those of the apparatus described heretofore.

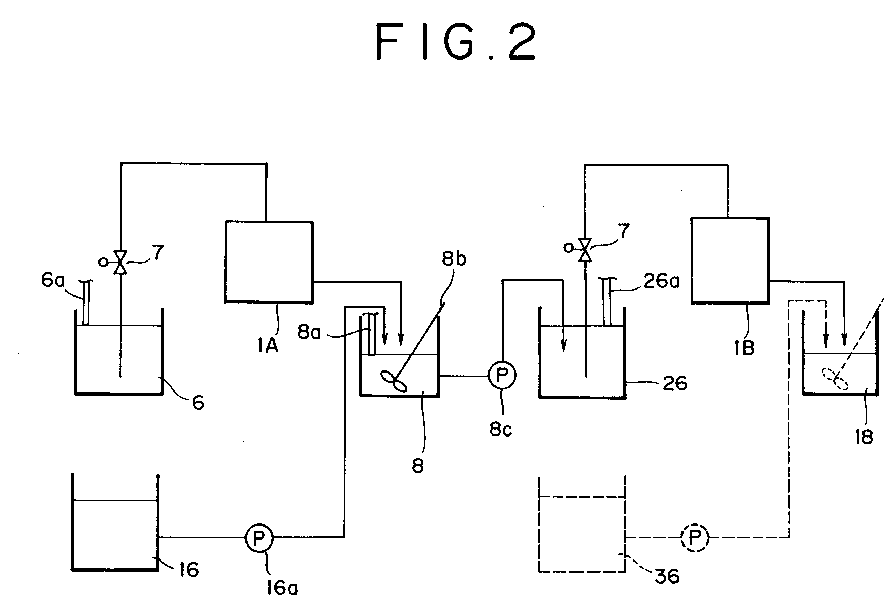

In Examples described hereinafter, the present method was carried out by means of evaporating/condensing apparatuses, containers for holding waste liquors to be treated, and containers for collecting distillates, etc. which are arranged as shown in Fig. 2.

In Fig. 2, reference numerals 1A and 1B designate evaporating/condensing apparatuses of the type described hereinabove, respectively. Reference numerals 6 and 16 designate stock tanks, respectively. The stock tank 6 holds a first waste liquor therein, and the stock tank 16 holds a second waste liquor. The stock tank 6 is provided with a level sensor 6a.

Reference numeral 8 designates a mixing vessel which is equipped with a level sensor 8a and a propeller fan 8b. Distillate (actually a liquid having overflowed from the tank 10 in Fig. 1) from the evaporating/condensing apparatus 1A is collected in the mixing vessel 8, and the second waste liquor from the stock tank 16 is also introduced via a pump 16a into same. The liquids are mixed by the propeller fan 8b. Reference numeral 26 also designates a stock tank for temporarily storing the liquid supplied from the mixing vessel 8 by a pump 8c and then supplying same to the evaporating/condensing apparatus 1B. This stock tank 26 is also provided with a level sensor 26a.

In the Examples, the apparatuses, devices, and containers thus arranged were used in the following automatically-controlled manner:

The supply of the first waste liquor from the stock tank 6 to the evaporating/condensing apparatus 1A is started when it is detected by the level sensor 6a that the tank 6 is filled with the first waste liquor to the predetermined level. More specifically, when the level sensor 6a in the tank 6 detects that the level of the first waste liquor therein is equal to a predetermined value, a signal indicative of the detection is supplied to the evaporating/condensing apparatus 1A to start same. The distillate from the evaporating/condensing apparatus 1A is collected in the mixing vessel 8. When the level sensor 8a therein detects that the level of the liquid therein is equal to a predetermined value, the collection of the distillate is stopped, and instead, the second waste liquor from the stock tank 16 is introduced thereinto. When a predetermined amount (which is dependent on pH values of waste liquors) of the second waste liquor has been supplied, the pump 16a is stopped. The distillate and the second waste liquor is stirred by the propeller fan 8b, and then the pump 8c is started to introduce the mixture into stock tank 26. When the level sensor 26a arranged in the stock tank 26 detects that the level of the mixture therein is equal to a predetermined value, the evaporating/condensing apparatus 1B starts to operate. Distillate delivered from the evaporating/condensing apparatus 1B is collected in the stock tank 18.

This stock tank 18 may be used as a mixing vessel into which a third waste liquor held in a stock tank 36 is supplied to mix with the distillate from the apparatus 1B, and the process described above may be repeated by another evaporating/condensing apparatus, not shown.

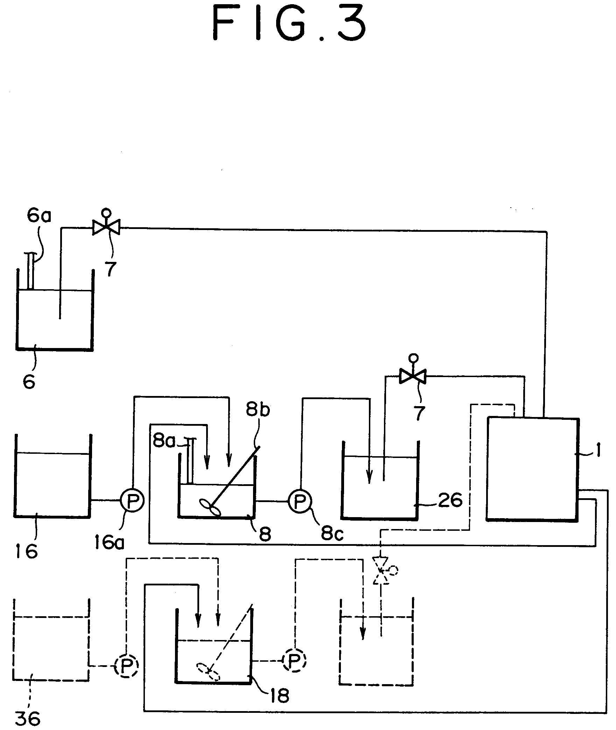

In order to carry out the present method by the arrangement shown in Fig. 2, provision of at least two evaporating/condensing apparatuses is required. However, if, after treatment of a waste liquor by an evaporating/condensing apparatus, solids gathered at the bottom of the evaporating pot 2 is discharged each time, provision of only one evaporating/condensing apparatus is sufficient for carrying out the present method. In such a case, the system is arranged, e.g. as shown in Fig. 3.

In the Examples, waste liquors produced from the treatment of a black and white light-sensitive silver halide photographic material were treated. The photographic material was treated in an automatic developing device GR-27 manufactured and sold by Konica Corporation, by the use of a black and white developer CDM651K manufactured and sold by Konica Corporation, a black and white fixing solution CFL851 manufactured and sold by Konica Corporation, and city water as a rinsing water. The total number of 1000 photographic films were treated by making the respective replenishing amount as the developer of 392 ml/m$^2$, the fixing solution of 524 ml/m$^2$ and the rinsing water of 5 liters/min. Then, an experiment was carried out, in which the waste developer and the waste fixing solution discharged from the process of treating the photographic material were treated according to the present method. The pH of the waste developer was 10.31, while that of the waste fixing solution was 4.96.

Example 1

The waste fixing solution, which was acidic (i.e.4.96 in pH), was used as the first waste liquor, while the waste developer, which was alkaline (i.e. 10.31 in pH) as the second waste liquor. According to the arrangement shown in Fig. 2, the evaporating/condensing apparatuses 1A and 1B each having a capacity of 30 liters were used. The first waste liquor was supplied from the stock tank 6 to the evaporating/condensing apparatus 1A in a controlled manner (in an amount of 50 to 300 ml at intervals of 2 minutes) such that approx. 5 liters of the waste liquors were constantly held in the evaporating pot 2, which was evacuated by the ejector pump 9a to 10 to 45 Torr. Freon R-22 (a trademark of E. I. Dupon Denemous Co., Inc.) was used as the refrigerant. The control of operation of the fan motor 13a and the regulation of pressure of Freon were effected so as to make the temperature of the waste liquor in the evaporating pot 2 equal to approx. 35 to 45°C, the temperature within the condensing vessel 3 to approx. 0 to 15°C, and the temperature within the tank 10 to 0 to 15°C.

The waste fixing solution discharged from the automatic developing device was directly received in the stock tank 6, in which was arranged the level sensor 6a set for sensing the level assumed by 5 liters of the first waste liquor held in the tank. Therefore, when the amount of the waste fixing solution in the stock tank 6 exceeded 5 liters, the evaporating/condensing apparatus started to operate, and treated 30 liters of the first waste liquor over approx. 15 hours.

When 2.38 liters of distillate flowed out of the evaporating/condensing apparatus 1A into the mixing vessel 8, 2.62 liters of the waste developer was introduced thereinto from the stock tank 16, and mixed with the distillate. The resulting mixture was transferred to the stock tank 26. The pH of the mixture was 10.00. When the amount of the mixture held in the stock tank 26 reached 5 liters, the level sensor 26a set for detecting a predetermined level of the liquid corresponding to this volume, supplied a signal indicative of the detection to the evaporating/condensing apparatus 1B to start same. This process was repeatedly carried out. The amount of the waste developer used was 22.5 liters in total.

When the evaporating/condensing apparatus 1B treated 23.8 liters of the mixture, solids were once taken out, and after treating another 23.8 liters of the mixture, it was operated for approx. 24 hours. A time period elapsed from the start of the evaporating/condensing apparatus 1A to the stoppage of the evaporating/condensing apparatus 1B was approx. 30 hours. The amount of solids collected from the evaporating/condensing apparatus 1A was 5 liters, and that of solids from the evaporating/condensing apparatus 1B was 10 liters. The amount of distillate collected in the stock tank 18 was 37.5 liters.

Example 2

The pH of the waste fixing solution as the first waste liquor (originally 4.96 in pH) held in the stock tank 6 was adjusted to 4.5 by adding an aqueous solution of 2.5% sulfuric acid thereinto. Further, the pH of the mixture of the distillate from the first waste liquor and the waste developer as the second waste liquor held in the mixing vessel 8 was adjusted to 11.0 by adding an aqueous solution of 5% pottasium hydroxide to the mixture. Except for these pH adjustments, the treatment of the waste liquors was carried out in the same manner as in Example 1.

According to the method of the present invention, the waste liquor(s) or the mixture thereof to be treated by the evaporating/condensing apparatus may be adjusted in respect of pH before treatment, and Example 2 shows a case of this variation. As an acid and an alkali used for such pH adjustments, there may be used various substances. However, from the viewpoint of cost and safety, it is preferable to use an aqueous solution of sulfuric acid in low concentration as the acid, and an aqueous solution of pottasium hydroxide in low concentration as the alkali.

Example 3

The waste fixing solution (4.96 in pH) as the first waste liquor was treated by the evaporating/condensing apparatus 1A, and distillate therefrom was collected in the mixing vessel 8. An aqueous solution of 10% calcium chloride was added to the distillate in a proportion of 2 ml thereof per 1 liter of the distillate. Except for this, the treatment was carried out in the same manner as in Example 1.

This is an example of a case in which Ca i.e. a metal of group II in the periodic table was added in the state of ions. As a substance to be added, there may be used other metals of group II in the periodic table, such as Mg and Ba. Further, when Ca is used, the form thereof is not restricted to $CaCl_2$, but it may also be added in the form of $Ca(OH)_2$, $CaCO_3$, $CaSO_2$, etc.

6

Example 4

The waste developer which was alkaline (10.31 in pH) was used as the first waste liquor, and the waste fixing solution which was acidic (4.96 in pH) was used as the second waste liquor, and the treatment was carried out under the same conditions as in Example 1.

Comparative Example

22.5 liters of the same waste developer and 30.0 liters of the same waste fixing solution as used in the above Examples were mixed. The pH of the resulting mixture was 5.8. The mixture was treated by the evaporating/condensing apparatus 1A, and distillate collected in the mixing vessel 8 was directly treated by the evaporating/condensing apparatus 1B again without subjecting it to pH adjustment. The amount of distillate collected in the stock tank 18 was 37.5 liters, and that of solids from the evaporating/condensing apparatus 1A was 10 liters, while that of solids from the evaporating/condensing apparatus 1B was 5 liters.

In each of the above Examples and Comparative Example, a sample was taken from distillate collected in the stock tank 18 when the amount of distillate reached approx. 10 liters and when it reached approx. 30 liters. Each sample was determined with respect to biochemical oxygen demand (BOD), iodine consumption, pH, and content of ammonia. The results are shown in Table 1.

## Table 1

| Analysis Items | BOD (ppm) | | Iodine Consumption | | pH | | Content of Ammonia | |
|---|---|---|---|---|---|---|---|---|
| Amount of Distillate (liters) | 10 | 30 | 10 | 30 | 10 | 30 | 10 | 30 |
| Example 1 | 17 | 15 | 5 | 8 | 9.6 | 9.2 | 332 | 428 |
| Example 2 | 12 | 8 | <1 | <1 | 9.2 | 8.9 | 328 | 410 |
| Example 3 | 14 | 10 | <1 | <1 | 7.2 | 7.4 | 12 | 8 |
| Example 4 | 30 | 24 | 21 | 17 | 5.4 | 5.2 | 158 | 219 |
| Comparative Example | 14 | 1014 | 8 | 955 | 5.9 | 3.2 | 149 | 1047 |

In Japan, what is called Sewerage Act regulates the quality of water which is permitted to be discharged into sewerage such that BOD should be 300 ppm or less, iodine consumption should be 220 ppm or less, and pH should be within a range of 6.5 to 8.5. Regulations are more strict in some local areas. The content of ammonia may bring about a problem of offensive smell, and therefore, it is preferred that the water discharged has substantially no ammonia content.

From Table 1, it is clear that the distillates obtained by treating, according to the present method, the waste liquors produced in the process of treating the black and white light-sensitive silver halide photographic material have good quality, i.e. they are far lower, in respect of the above-mentioned properties except pH, than the maximum values under regulation. It is understood that the present method is very effective especially with respect to BOD and iodine consumption. In other words, the present method can effectively eliminate organic matters having reducing properties, sulfur compounds, etc. from the waste liquors. As to pH, adjustment can be easily effected by the use of an aqueous solution of 2.5% sulfuric acid or an aqueous solution of 2.5% pottasium hydroxide. The smell of ammonia was not so offensive. The distillate obtained in Example 3, in which calcium chloride was added, did not need pH adjustment, and there was no smell of ammonia either. The solids collected were in the form of non-tacky sludge. Burning of the solids in an incinerator equipped with a deodorizing device gave harmless ashes containing 43 g of silver.

**Claims**

1. A method of treating a waste liquor comprising the stages of:
   treating an acidic waste liquor in a first separating-by-evaporation process,
   said separating-by-evaporation process comprising the steps of evaporating said acidic waste liquor, and condensing the resulting vapor into an acidic distillate, to thereby separate said acidic waste liquor into solids and said acidic distillate;
   adjusting pH of said acidic distillate to an alkaline value; and
   treating the resulting pH-adjusted distillate in a second separating-by-evaporation process,
   said second separating-by-evaporating process comprising the steps of evaporating the pH-adjusted distillate, and
   condensing the resulting vapor into a distillate, to thereby separate the pH-adjusted distillate into solids and said distillate.

2. A method of claim 1, wherein the pH of said acidic distillate is adjusted by an alkaline waste liquor.

3. A method of treating a waste liquor comprising the stages of:
   treating an alkaline waste liquor in a first separating-by-evaporation process,
   said separating-by-evaporation process comprising the steps of evaporating said alkaline waste liquor, and condensing the resulting vapor into an alkaline distillate, to thereby separate said alkaline waste liquor into solids and said alkaline distillate;
   adjusting pH of said alkaline distillate to an acidic value; and
   treating the resulting pH-adjusted distillate in a second separating-by evaporation process,
   said second separating-by-evaporating process comprising the steps of evaporating the pH-adjusted distillate, and condensing the resulting vapor into a distillate, to thereby separate the pH-adjusted distillate into solids and said distillate.

4. A method of claim 3, wherein the pH of said alkaline distillate is adjusted by an acidic waste liquor.

5. A method of any of claims 1 to 4, wherein said waste liquor contains ammonia, and metal selected from group II in the periodic table is added to said distillate obtained from said first separating-by-evaporation process.

6. A method of claim 2, wherein said alkaline waste liquor is a waste developer.

7. A method of claim 4, wherein said acidic waste liquor is a waste fixing solution.

8. A method of claim 5, wherein said metal of group II in the periodic table is at least one metal selected from the group consisting of calcium, magnesium and barium.

9. A method of claim 8, wherein said metal of group II in the periodic table is calcium.

# F I G . I

# FIG. 2

# F I G . 3

European Patent
Office

**EUROPEAN SEARCH REPORT**

Application Number

EP 92 30 6753

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 176 963 (VON BECKERATH, KURT)<br>* page 6, paragraph 1 -paragraph 3 *<br>* page 16, line 5 - page 17, line 27;<br>figures 1,5 * | 1,3 | C02F1/04<br>B01D3/00 |
| | --- | | |
| Y<br>A | EP-A-0 357 170 (KONICA CORPORATION)<br>* claims 1-13 * | 1,3<br>5-9 | |
| | --- | | |
| A | US-A-4 260 462 (UNITED STATES STEEL<br>CORPORATION)<br>* column 2, line 22 - line 54; figure 1 * | 1 | |
| | --- | | |
| P,A | EP-A-0 457 303 (KONICA CORPORATION) | | |
| | ----- | | |
| | | | **TECHNICAL FIELDS SEARCHED (Int. Cl.5 )**<br><br>C02F<br>B01D |

The present search report has been drawn up for all claims

| Place of search | Date of completion of the search | Examiner |
|---|---|---|
| THE HAGUE | 13 NOVEMBER 1992 | VAN BELLEGHEM W.R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)